Europäisches Patentamt

European Patent Office

Office européen des brevets

(11) Veröffentlichungsnummer: **0 282 755 B1**

(12) **EUROPÄISCHE PATENTSCHRIFT**

(45) Veröffentlichungstag der Patentschrift: **15.07.92**

(21) Anmeldenummer: **88102417.8**

(22) Anmeldetag: **19.02.88**

(51) Int. Cl.5: **H02K 5/128**, F04D 13/06

(54) **Spaltrohrmotor.**

(30) Priorität: **03.03.87 DE 3706787**

(43) Veröffentlichungstag der Anmeldung:
**21.09.88 Patentblatt 88/38**

(45) Bekanntmachung des Hinweises auf die
Patenterteilung:
**15.07.92 Patentblatt 92/29**

(84) Benannte Vertragsstaaten:
**CH DE FR GB IT LI**

(56) Entgegenhaltungen:
**CH-A- 372 928      CH-A- 437 502**
**DE-C- 971 240      FR-A- 1 299 237**
**FR-A- 1 531 555      FR-A- 2 524 578**

(73) Patentinhaber: **Halm, Richard**
**Silcherstrasse 54 Postfach 69**
**W-7066 Baltmannsweiler(DE)**

(72) Erfinder: **Halm, Richard**
**Silcherstrasse 54 Postfach 69**
**W-7066 Baltmannsweiler(DE)**

(74) Vertreter: **Patentanwälte Phys. Bartels**
**Dipl.-Ing. Fink Dr.-Ing. Held**
**Lange Strasse 51**
**W-7000 Stuttgart 1(DE)**

## Beschreibung

Die Erfindung betrifft einen Spaltrohrmotor mit den Merkmalen des Oberbegriffs des Anspruches 1.

Bei einem bekannten Spaltrohrmotor dieser Art (CH-A-372 928) liegt der radial nach außen ragende Flansch des Spaltrohres unmittelbar am Gießharzkörper und im Bereich seiner radial äußeren Randzone an einem Flansch des Motorgehäuses an. Zwischen dieser Randzone des Gehäuseflansches und einem Flansch eines anschlußgehäuseseitigen Lagerschildes ist eine erste Dichtungsscheibe, zwischen dem Flansch des Lagerschildes und dem Anschlußgehäuse eine zweite Dichtungsscheibe angeordnet. Der radial nach innen ragende Flansch des Spaltrohres liegt einerseits unmittelbar am Gießharzkörper und andererseits unmittelbar an einen fest im Motorgehäuse sitzenden Lagerträger an. Die Abdichtung ist deshalb auf der Seite des Anschlußgehäuses aufwendig.

Bei einem anderen bekannten Spaltrohrmotor (DE-C-971 240) ist kein Gießharzkörper vorgesehen. Vielmehr liegt der zylindrische Mittelteil des Spaltrohres an der Innenwandung des Statorblechpaketes und zweier Zentrierteile an, die sich gleichachsig zum Statorblechpaket an dessen eine bzw. andere Stirnseite anschließen und in je einen Sitz des Motorgehäuses eingesetzt sind. Beide Zentrierteile sind mit einer Schulter versehen an welcher der radial nach außen ragende bzw. der radial nach innen ragende Flansch des Spaltrohres unmittelbar anliegt.

Je eine Dichtungsscheibe wird an die der Schulter abgewandte Seite der beiden Flansche des Spaltrohres mittels eines Gewinderinges bzw. einer Flanschbuchse und eines Gewinderinges angepreßt. Die Abdichtung ist hier also ebenfalls aufwendig. Ferner muß der axiale Abstand der beiden Flansche des Spaltrohres voneinander genau an den axialen Abstand der Schultern der beiden Zentrierteile angepaßt sein.

Der Erfindung liegt die Aufgabe zugrunde, einen Spaltrohrmotor der eingangs genannten Art zu schaffen, der insbesondere hinsichtlich der erforderlichen Dichtungen einfach ausgebildet ist. Diese Aufgabe löst ein Spaltrohrmotor mit den Merkmalen des Anspruches 1.

Dadurch, daß auf der Seite des Anschlußgehäuses die Dichtscheibe mit ihrer radial äußeren Randzone zwischen dem Anschlußgehäuse und dem Gießharzkörper und mit ihrer radial inneren Randzone zwischen dem radial nach außen ragenden Flansch des Spaltrohres und dem Gießharzkörper liegt, wird mit dieser einzigen Dichtscheibe sowohl zwischen dem Anschlußgehäuse und dem Gießharzkörper als auch zwischen dem Spaltrohr und dem Gießharzkörper mit einfachen Mitteln eine zuverlässige Dichtung erreicht. Ebenso ist auf der dem Anschlußgehäuse abgewandten Seite eine zuverlässige Dichtung gewährleistet, da hier die zweite Dichtscheibe an dem radial nach innen ragenden Flansch des Spaltrohres und an einer Schulter des Gießharzkörpers anliegt. Zu einer einfachen Bauweise des Spaltrohrmotors trägt ferner bei, daß der Träger, der die zweite Dichtscheibe gegen die Schulter des Gießharzkörpers preßt, auch den radial nach außen ragenden Flansch des Spaltrohres gegen die mit diesem Flansch zusammenwirkende erste Dichtscheibe zieht, wodurch außerdem Toleranzen in der Länge des zylindrischen Mittelteils des Spaltrohres von der ersten Dichtscheibe ausgeglichen werden können.

Bei einer bevorzugten Ausführungsform ist die zweite Dichtscheibe gemäß Anspruch 2 zwischen der Schulter des Gießharzkörpers und einer Verbindungsscheibe angeordnet, welche der Träger gegen die Schulter zieht.

Besonders vorteilhaft ist eine Ausbildung der beiden Dichtscheiben gemäß den Ansprüchen 3 und 4, weil dann der aus der ersten Dichtscheibe auszuschneidende Teil des Dichtungsmaterials keinen Abfall bildet, sondern zur Herstellung der zweiten Dichtscheibe verwendet werden kann.

Vorteilhafterweise ist gemäß Anspruch 5 zwischen dem dem Anschlußgehäuse benachbarten Lagerträger und einer Trennwand ein Filterring in das Spaltrohr eingesetzt.

Weitere Vorteile ergeben sich aus der Beschreibung und der Zeichnung. In dieser sind zwei Spaltrohrmotorpumpen als Ausführungsbeispiele des Gegenstandes der Erfindung schematisch dargestellt. Es zeigen

Fig. 1    einen Schnitt längs der Linie B'BAA' in Fig. 2 durch ein erstes Ausführungsbeispiel,

Fig. 2    eine Ansicht in Richtung des Pfeiles A, auf der linken Seite mit Lagerdeckel und auf der rechten Seite ohne Lagerdeckel und teilweise geschnitten dargestellt,

Fig. 3    eine Draufsicht in Richtung des Pfeiles B in Fig. 1 ohne Anschlußdeckel,

Fig. 4    einen Teilschnitt nach Linie AA' in Fig. 2,

Fig. 5    einen Teilschnitt nach Linie BB' in Fig. 2,

Fig. 6    eine Seitenansicht mit Teilschnitt eines zweiten Ausführungsbeispiels,

Fig. 7    eine Ansicht in Richtung des Pfeiles C in Fig. 6.

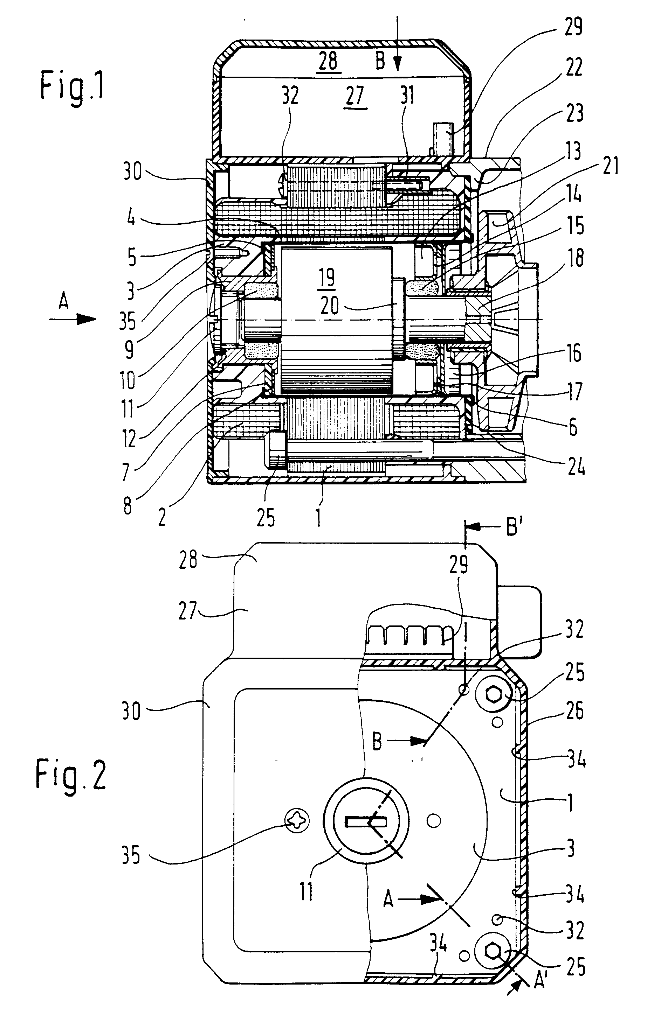

Ein Statorblechpaket 1 eines Spaltrohrmotors nimmt eine Wicklung auf, die beidseitig übersteht und in einen Gießharzkörper 3 elektrisch isolierend eingebettet ist. In den hohlen Gießharzkörper 3 ist ein Spaltrohr 4 mit insbesondere strammem Schiebesitz passend eingesetzt. Das Spaltrohr 4 hat in Fig. 1 gesehen an seinem linken Ende einen nach innen ragenden Flansch 5 und an seinem rechten Ende einen nach außen ragenden Flansch 6.

Der Flansch 5 des Spaltrohres 4 steht an der in der Zeichnung linken Seiten einer elastischen Dichtscheibe 7 an, die mit ihrer in der Zeichnung linken Seiten an einer Schulter im Innern des Gießharzkörpers 3 anliegt. Auf der in der Zeichnung rechten Seite der elastischen Dichtscheibe 7 befindet sich eine insbesondere aus Edelstahl bestehende metallische Verbindungsscheibe 8. Der in der Zeichnung linke Teil des Gießharzkörpers 3, die elastische Dichtscheibe 7 und die Verbindungsscheibe 8 sind von einem rückwärtigen Lagerträger 9 durchsetzt, der im Gießharzkörper 3 wie dargestellt durch nach außen stehende Bunde formschlüssig oder durch Einpressen kraftschlüssig gehalten ist, wobei der in der Zeichnung rechte Bund die Verbindungsscheibe 8 hält. Im Lagerträger 9 ist ein rückwärtiges Lager 10 untergebracht und in diesen Träger ist auch eine Verschlußschraube 11 eingeschraubt. Der Spalt zwischen der Verschlußschraube 11 und dem Lagerträger 9 ist durch einen Dichtring 12 abgedichtet.

Auf der in der Zeichnung rechten Seite ist in das Spaltrohr 4 ein im Querschnitt U-förmiger vorderer Lagerträger 13 eingesetzt, der eine Reihe von koaxialen Bohrungen aufweist und ein vorderes Lager 15 aufnimmt. Zwischen einer in der Zeichnung rechts von dem vorderen Lagerträger 13 angeordneten topfförmigen Trennwand 16, deren Außenumfang gewellt ausgebildet ist, ist ein Filterring 17 eingesetzt, dessen äußerer Durchmesser etwa dem äußeren Durchmesser des vorderen Lagerträgers 13 und der Trennwand 16 entspricht und dessen innerer Durchmesser etwa bis zu dem Bereich der Bohrungen 14 reicht.

Die Lager 10 und 13 dienen zum Lagern einer Rotorwelle 18, die einen zwischen den Lagern angeordneten Rotor 19 trägt, der an seiner in der Zeichnung rechten Seite eine Anlaufscheibe 20 aufweist, mit welcher er an dem vorderen Lager 15 ansteht. Die Rotorwelle 18 steht über die Trennwand 16 axial über und trägt an ihrem freien Ende einen als Pumpenrad ausgebildeten Treibkörper 21. Der Treibkörper ist von einem nur teilweise dargestellten Anschlußgehäuse 22 umgeben, dessen in der Zeichnung linker Rand in eine Ringnut des Gießharzkörpers 3 eingreift und dadurch in radialer Richtung festgelegt ist. Ein nach innen ragender Bund 23 des Anschlußgehäuses 22 liegt an einer elastischen Dichtscheibe 24 an, die sich in radialer Richtung bis zum Spaltrohr 5 erstreckt, dessen vorderer Flansch 6 auf der in der Zeichnung rechten Seite der Dichtscheibe 24 anliegt. Das Anschlußgehäuse 22 ist mittels schraubenförmigen Verbindungsmitteln 25, welche einen über den Gießharzkörper 3 überstehendedn Teil des Statorblechpaketes 1 durchsetzen, mit diesem verbunden. Das Statorblechpaket 1 ist im wesentlichen quadratisch ausgebildet, wodurch gegenüber dem im Querschnitt kreisförmigen Gießharzkörper 3 überstehende Ecken vorhanden sind, welche von den Verbindungsmitteln 25 durchsetzt werden. Die konzentrische Anordnung der Ringnut zum Zentrieren des Anschlußgehäuses 22 und des Hohlraumes zur Aufnahme des Spaltrohres 4 am Gießharzkörper ist durch deren Gießform vorgegeben.

Das in den Gießharzkörper 3 eingesetzte Spaltrohr 4 wird von dem rückwärtigen Lagerträger 9 über die Verbindungsscheibe 8 im Gießharzkörper 3 gehalten. Es ist kürzer als der Abstand zwischen der linken Seite der Dichtscheibe 7 und der rechten Seite der Dichtscheibe 24, jeweils in nicht zusammengedrücktem Zustand, so daß der nach innen stehende Flansch 5 und der nach außen stehende Flansch 6 des Spaltrohres 4 die Dichtscheiben 7 und 24 an ihren dem Spaltrohr benachbarten Rändern zusammenpressen, wodurch eine Dichtwirkung erzielt wird. Der Außendurchmesser der Dichtscheibe 7 ist nicht größer als der Innendurchmesser der Dichtscheibe 24, so daß beide in einem Arbeitsgang aus einer einzigen ebenen Platte ausgestanzt werden können.

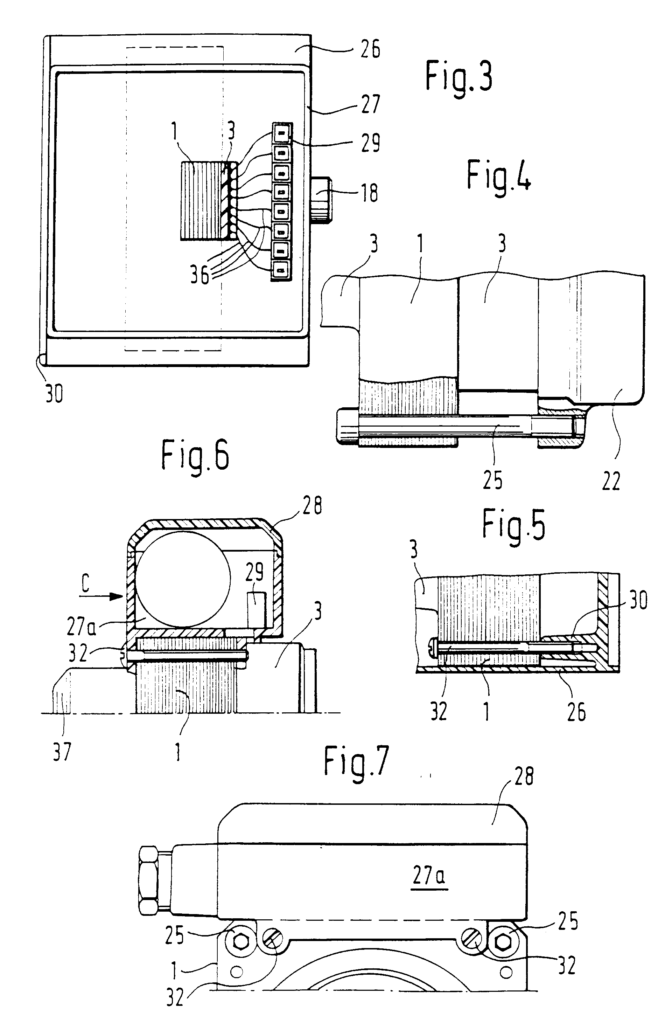

Der Motor ist von einem insbesondere aus Kunststoff bestehenden, über den Gießharzkörper 3 und das Statorblechpaket 1 geschobenen Motorgehäuse 26 umgeben, das im Querschnitt im wesentlichen quadratisch ausgebildet ist und abgeschrägte Ecken aufweist. An das Motorgehäuse 26 ist ein Anschlußkasten 27 angeformt, in dem sich eine einstückig damit verbundene Steckerleiste 29 befindet. Der Anschlußkasten 27 ist nach oben durch einen Anschlußkastendeckel 28 abgeschlossen. Das Motorgehäuse 26 ist an seinem in Fig. 1 linken Ende mit einem Lagerdeckel 30 abgeschlossen. Es hat auf seiner in Fig. 1 rechten Seite radial nach innen stehende Augen 31, die in Fig. 5 genauer dargestellt und in Fig. 1 nur teilweise und versetzt gezeichnet sind. Das Motorgehäuse 26 ist mittels schraubenförmiger Verbindungsmittel 32, welche das Statorblechpaket 1 durchsezten und in die Augen 31 eingeschraubt sind, mit dem Statorblechpaket 1 verbunden. Das Motorgehäuse 26 weist nach innen stehende Rippen 32 auf, welche in entsprechende Nuten im Gießharzkörper 3 eingreifen. Der Lagerdeckel 30 ist mittels in den Gießharzkörper 3 eingeschraubter Schrauben 35 gesichert. In den Anschlußkasten 27 sind von der Wicklung stammende Drähte 36 geführt und mit der Steckerleiste 29 elektrisch leitend verbunden.

Während des Betriebes der Spaltrohrmotorpumpe fließt Flüssigkeit vom Anschlußgehäuse 22 über eine Spalte zwischen der Trennwand 16 und dem Spaltrohr 4 über den Filterring 17 und die Bohrungen 14 im vorderen Lagerträger 13 in den Innenraum des Spaltrohres 4, in welchem sich der Rotor 19 befindet. Um das vordere Lager 15 bildet sich durch die rotierende Anlaufscheibe 20 ein Schmierkreislauf. Durch das Lagerspiel zwischen der Rotorwelle 18 und dem rückwärtigen Lager 10 fließt Flüssigkeit hindurch und gelangt über die hohle Rotorwelle 18, in welcher sich eine Düse oder Drosselstelle befindet durch die Mitte des Treibkörpers 21 wieder in das Anschlußgehäuse 22, so daß sich ein Schmierkreislauf ergibt.

Die Spaltrohrmotorpumpe nach dem zweiten Ausführungsbeispiel entspricht im wesentlichen der des ersten Ausführungsbeispiels, so daß bei gleichen Teilen gleiche Bezugszeichen verwendet werden, wobei Bezugszeichen von Teilen die gegenüber dem ersten Ausführungsbeispiel geändert sind der Buchstabe a beigefügt ist. Bei dem zweiten Ausführungsbeispiel fehlt das Motorgehäuse 26. Der Anschlußkasten 27a sitzt dieses beiderseitig mittels Verbindungteilen übergreifend auf dem Statorblechpaket 1 und ist mittels diese Verbindungsteile durchsetzender Schrauben 32 mit dem Blechpaket 1 verbunden. Die in Fig. 6 linke Seite des Gießharzkörpers 3 ist durch eine bis zum Statorblechpaket 1 reichende Haube 37 abgedeckt, die mittels nicht dargestellter Schrauben mit dem Gießharzkörper 3 verbunden ist. Der Gießharzkörper 3 ist auf seiner in Fig. 6 rechten Seite von dem Anschlußgehäuse 2 abgedeckt, wobei die Verschlußschraube 11 wie beim ersten Ausführungsbeispiel ohne Abnahme der Haube 37 bzw. des Lagerdeckels 30 zugänglich ist.

Anstelle eines als Pumpenrad für eine Flüssigkeitspumpe ausgebildeten Treibkörpers 21 kann auch ein anderer Treibkörper, z.B. ein Lüfterrad, ein Pumpenrad einer Vakuumpumpe oder dgl., verwendet werden.

**Patentansprüche**

1. Spaltrohrmotor mit
   a) einem in einem Gießharzkörper (3) untergebrachten Spaltrohr (4), das ein zylindrisches Mitteleil und an seinem einen Ende einen radial nach außen und an seinem anderen Ende einen radial nach innen ragenden Flansch (5,6) aufweist, der sich unmittelbar an das zylindrische Mittelteil anschließt, das in den Gießharzkörper (3) passend eingesetzt ist,
   b) einer Dichtscheibe (24) zwischen dem radial nach außen ragenden Flansch (6) des Spaltrohres (4) und einem Anschlußgehäuse (22) und
   c) einem vom Anschlußgehäuse (22) abgewandten, mit dem Spaltrohr (4) verbundenen Lager (10) in einem Träger (9),

dadurch gekennzeichnet, daß
   d) die Dichtscheibe (24) mit ihrer radial äußeren Randzone zwischen dem Anschlußgehäuse (22) und dem Gießharzkörper (3) und mit ihrer radial inneren Randzone zwischen dem radial nach außen ragenden Flansch (6) des Spaltrohres (4) und dem Gießharzkörper (3) liegt,
   e) eine zweite Dichtscheibe (7) an dem radial nach innen ragenden Flansch (5) des Spaltrohres (4) und an einer Schulter des Gießharzkörpers (3) anliegt, und
   f) der Träger (9) für das Lager (10) die zweite Dichtscheibe (7) und über diese den radial nach innen ragenden Flansch (5) des Spaltrohres (4) gegen die Schulter des Gießharzkörpers (3) preßt.

2. Spaltrohrmotor nach Anspruch 1, dadurch gekennzeichnet, daß die zweite Dichtscheibe (7) zwischen der Schulter des Gießharzkörpers (3) und einer Verbindungsscheibe (8) angeordnet ist, die mit einem das vom Anschlußgehäuse abgewandte Lager (10) aufnehmenden Lagerträger (9) verbunden ist.

3. Spaltrohrmotor nach Anspruch 2, dadurch gekennzeichnet, daß der Außendurchmesser der zweiten Dichtscheibe (7) höchstens gleich dem Innendurchmesser der zwischen dem Anschlußgehäuse (22) und dem Gießharzkörper (3) angeordneten ersten Dichtscheibe (24) ist.

4. Spaltrohrmotor nach Anspruch 3, dadurch gekennzeichnet, daß die zweite Dichtscheibe (7) aus dem aus der ersten Dichtscheibe (24) ausgeschnittenen Teil besteht.

5. Spaltrohrmotor nach einem der Ansprüche 1 bis 4, dadurch gekennzeichnet, daß der dem Anschlußgehäuse (22) benachbarte Lagerträger (13) samt Trennwand (16) und dazwischen angeordnetem Filterring (17) in das Spaltrohr (4) eingesetzt sind.

**Claims**

1. Gap tube motor with
   a) a gap tube (4) located in a moulded resin member (3), which gap tube (4) has a cylindrical central part and at its one end a flange (5, 6) projecting radially outwards and at its other end a flange (5, 6) projecting radially inwards, which flange directly adjoins the cylindrical central part, which is accommodated in the moulded resin member (3),
   b) a sealing disc (24) between the flange (6) of the gap tube (4) projecting radially outwards and a connecting housing (22) and

c) a bearing (10) remote from the connecting housing (22) and connected to the gap tube (4), in a support (9), characterised in that

d) the sealing disc (24) lies with its radially outer marginal area between the connecting housing (22) and the moulded resin member (3) and with its radially inner marginal area between the flange (6) of the gap tube (4) projecting radially outwards and the moulded resin member (3),

e) a second sealing disc (7) bears against the flange (5) of the gap tube (4) projecting radially inwards and against a shoulder of the moulded resin member (3), and

f) the support (9) for the bearing (10) presses the second sealing disc (7) and by way of the latter the flange (5) of the gap tube (4) projecting radially inwards against the shoulder of the moulded resin member (3).

2. Gap tube motor according to Claim 1, characterised in that the second sealing disc (7) is located between the shoulder of the moulded resin member (3) and a connecting disc (8), which is connected to a bearing support (9) receiving the bearing (10) remote from the connecting housing.

3. Gap tube motor according to Claim 2, characterised in that the outer diameter of the second sealing disc (7) is at the most equal to the inner diameter of the first sealing disc (24) located between the connecting housing (22) and the moulded resin member (3).

4. Gap tube motor according to Claim 3, characterised in that the second sealing disc (7) consists of the part cut out of the first sealing disc (24).

5. Gap tube motor according to One of Claims 1 to 4, characterised in that the bearing support (13) adjacent the connecting housing (22) together with the dividing wall (16) and filter ring (17) located therebetween are inserted in the gap tube (4).

**Revendications**

1. Moteur à manchon d'entrefer qui comprend:

a) un manchon d'entrefer (4) logé dans un corps en matière plastique moulée (3) qui comprend une partie centrale cylindrique et, à l'une de ses extrémités, une bordure s'avançant radialement vers l'intérieur (5,6) qui se raccorde directement à ladite partie centrale, qui est étroitement insérée dans le corps de matière plastique;

b) une rondelle d'étanchéité (24) entre la bordure s'avançant radialement vers l'extérieur (6) du manchon d'entrefer (4) et un capot raccordé (22), et

c) un palier (10), à l'opposé du capot (22), monté dans un support (9),

caractérisé en ce que :

d) la rondelle d'étanchéité (24) est placée par sa zone marginale radialement extérieure, entre le capot (22) et le corps moulé en résine ou en matière plastique (3), tandis que sa zone marginale radialement intérieure est située entre la bordure s'avançant radialement vers l'extérieur (6) du manchon d'entrefer (4) et le corps moulé (3),

e) une seconde rondelle d'étanchéité (7) s'applique contre la bordure s'avançant radialement vers l'intérieur (5) du manchon d'entrefer (4) et contre un épaulement du corps moulé (3), et

f) le support (9) du palier (10) pressant la rondelle d'étanchéité (7) et, par son entremise, la bordure s'avançant radialement vers l'intérieur (5) du manchon d'entrefer (4), contre l'épaulement du corps moulé (3) de résine ou de matière plastique.

2. Moteur à manchon d'entrefer selon la revendication 1, caractérisé en ce que la seconde rondelle d'étanchéité (7) est disposée entre l'épaulement du corps de matière plastique moulée (3) et une rondelle de montage ou de liaison (8) qui est reliée à un support (9) recevant le palier (10).

3. Moteur à manchon d'entrefer selon la revendication 2, caractérisé en ce que le diamètre extérieur de la seconde rondelle d'étanchéité (7) est, tout au plus, égal au diamètre intérieur de la première rondelle d'étanchéité (24) située entre le capot (22) et le corps de matière plastique moulée (3).

4. Moteur à manchon d'entrefer selon la revendication 3, caractérisé en ce que la seconde rondelle d'étanchéité (7) est formée d'une partie coupée de la première rondelle (24).

5. Moteur à manchon d'entrefer selon l'une quelconque des revendications 1 à 4, caractérisé en ce que le support de palier (13) proche du capot (22) est logé dans le manchon d'entrefer, conjointement avec la cloison (18) et avec la bague de filtrage interposée (17).

Fig.1

Fig.2

Fig.3

Fig.4

Fig.6

Fig.5

Fig.7